(19) **Europäisches Patentamt European Patent Office Office européen des brevets**

(11) **EP 1 647 707 B1**

(12) **EUROPEAN PATENT SPECIFICATION**

(45) Date of publication and mention
of the grant of the patent:
**30.05.2007 Bulletin 2007/22**

(51) Int Cl.:
*F02N 11/08* (2006.01)  *F02N 11/10* (2006.01)

(21) Application number: **05022248.8**

(22) Date of filing: **12.10.2005**

(54) **Control device for internal combustion engine and vehicle equipped therewith and control method for internal combustion engine**

Steuervorrichtung und -verfahren für eine Brennkraftmaschine und mit dieser Vorrichtung ausgestattetes Kraftfahrzeug

Dispositif et procédé de commande de moteur à combustion interne, et véhicule equipé dudit dispositif

(84) Designated Contracting States:
**DE FR IT**

(30) Priority: **13.10.2004 JP 2004298503**

(43) Date of publication of application:
**19.04.2006 Bulletin 2006/16**

(73) Proprietors:
• **Toyota Jidosha Kabushiki Kaisha**
  **Toyota-shi, Aichi-ken, 471-8571 (JP)**
• **DENSO CORPORATION**
  **Kariya-city, Aichi-pref., 448-8661 (JP)**

(72) Inventors:
• **Moriya, Kouki**
  **Toyota-shi,**
  **Aichi-ken, 471-8571 (JP)**
• **Taki, Nobuyuki**
  **Toyota-shi,**
  **Aichi-ken, 471-8571 (JP)**
• **Takahashi, Shigenori**
  **Kariya-city**
  **Aichi-pref, 448-8661 (JP)**

(74) Representative: **TBK-Patent**
  **Bavariaring 4-6**
  **80336 München (DE)**

(56) References cited:
  **DE-B3- 10 211 463**     **US-A1- 2003 197 385**

**Description**

BACKGROUND OF THE INVENTION

1. Field of the Invention

The invention relates to a control device for automatically stopping or starting an internal combustion engine, a vehicle equipped therewith, and a method of controlling the operation of the internal combustion engine to automatically stop or start when predetermined conditions are met. More specifically, the invention relates to measures for improving the efficiency of performing maintenance on an internal combustion engine when the hood is open.

2. Description of the Related Art

A control device for an internal combustion engine that executes a control to automatically stop the internal combustion engine when a predetermined stop condition is satisfied, such as when a vehicle is temporarily stopped while waiting for a traffic signal to change at an intersection, is known in the art. Such a control device is also capable of executing a control to restart the internal combustion engine when a predetermined start condition that counters the predetermined stop condition, such as pressing on the accelerator pedal, is satisfied. In this manner, fuel is thus saved and exhaust emissions are reduced.

In particular, Patent DE 10211463 B3 discloses a motor vehicle having an automatic start/stop device as well as a corresponding method for switching off (stopping) the internal combustion engine and for automatically restarting the internal combustion engine. The automatic start/stop device of this document includes various sensors for determining the actual operating conditions of the engine to be controlled as well as of the vehicle. Specifically, the temperatures of the exhaust gas system, the internal combustion engine and the transmission are sensed to decide whether a temporary shutdown of the internal combustion engine will not cause any problems in view of an extremely high temperature. It is further determined whether the hood is open or closed, or whether any of the vehicle doors is open or closed. The vehicle speed, and in particular whether the vehicle speed is zero or close to zero, is sensed, and whether an accelerator pedal or brake pedal is operated by the driver. In case of an automatic transmission, the position of the shift lever for selecting a particular operating condition of the automatic transmission (is further sensed). Furthermore, a timer is provided for defining a delay time for the shutdown of the internal combustion engine to avoid an immediate stopping of the engine in case the vehicle must wait because of traffic jam, traffic lights or any actual traffic condition.

It is further possible for the driver to switch off the operation of the start/stop-device. This condition serves to ensure safety and a comfortable operation of the start/stop-device, and the main criterion for defining the condition whether to stop the internal combustion engine is based on the detection of the operational condition of the vehicle door and the engine hood.

There are also other control devices for internal combustion engines that are designed to increase work efficiency (see Japanese Patent Laid-Open Publication No. JP-A-58-117330 for an example). Such a control device disables an automatic stop/start function that automatically stops or starts operation of the internal combustion engine while the hood is open with the vehicle stopped. Furthermore, the internal combustion engine is prevented from automatically stopping or restarting when maintenance work is being performed with the hood open.

Maintenance work may be performed with the hood open on a vehicle where setting of the automatic stop/start function is disabled while the hood is open as described above. However, should a technician working on the automobile or a tool or the like accidentally contact switches that detect whether the hood is open, it is possible that the hood may be incorrectly detected as closed, whereby operation of the internal combustion engine automatically stops or restarts. This in turn may decrease the efficiency at which maintenance work can be performed.

Furthermore, a similar problem also exists when a technician performs maintenance work with the hood open, unaware that the vehicle is equipped with such an automatic stop/start function. A countermeasure against such problems is strongly needed to ensure that maintenance work can be performed efficiently on a vehicle equipped with such an automatic stop/start function.

SUMMARY OF THE INVENTION

It is an object of the invention to provide a control device for an internal combustion engine capable of reliably preventing the setting of an automatic stop/start function while the hood is open, and ensuring that maintenance work can be performed efficiently while the hood is open, regardless of whether one is aware that the vehicle is equipped with the automatic stop/start function.

According to the invention, a control device for an internal combustion engine automatically controls the operation of the internal combustion engine, stopping and starting the engine based upon a predetermined condition. The automatic stop/start function is set so that engine automatically stops and starts while the vehicle is stopped. However, when the hood is open while the internal combustion engine is running, a control is performed that disables the automatic stop/start function. After setting of the automatic stop/start function is disabled, setting of the automatic stop/start function is subsequently enabled when the hood is closed and a predetermined vehicle running condition is met.

According to such an aspect of the invention, after setting of the automatic stop/start function has been disabled while the hood is open with the vehicle stopped, setting of the automatic stop/start function becomes enabled once the hood is closed and the predetermined vehicle running condition is met. Therefore, if the setting of the automatic stop/ start function is disabled in order to perform maintenance work with the hood open, setting of the automatic stop/start function is not enabled unless a predetermined vehicle running condition is met. This remains true even if a part of a technician's body or a tool, etc., accidentally contacts a release switch for the hood causing the hood to be incorrectly detected as being closed. Thus, when maintenance work is performed with the hood open, automatic stops and restarts of the internal combustion engine are reliably prevented. Consequently, maintenance work can be performed efficiently with the hood open, regardless of whether one is aware that the vehicle is equipped with an automatic stop/start function.

The following embodiment in particular is conceivable for specifying the predetermined vehicle running condition.

Namely, the predetermined vehicle running condition is set forth as a case where vehicle speed ≥ predetermined vehicle speed.

According to such an aspect of the invention, the predetermined vehicle running condition is met when the vehicle speed is equal to or greater than a predetermined vehicle speed. Therefore, determination of the predetermined vehicle running condition is made clear, and a standard for enabling setting of the automatic stop/start function is set high. This enables maintenance work to be performed more efficiently with the hood open, regardless of whether one is aware that the vehicle is equipped with an automatic stop/start function.

Furthermore, the internal combustion engine is controlled so as to automatically start and operate while the hood is open, whereas setting of the automatic stop/start function is disabled and operation of the internal combustion engine is continued when a shift position of a transmission is in a non-driving position. In such a case, therefore, when maintenance work is performed with the hood open, automatic stopping of the internal combustion engine is reliably prevented. Consequently, maintenance work can be performed efficiently and safely with the hood open, regardless of whether one is aware that the vehicle is equipped with an automatic stop/start function. Moreover, problems caused by stopping the internal combustion engine can also be resolved. For example, such problems include: insufficient braking force due to a decrease in brake boost pressure of a brake servo unit, which increases braking force through the use of negative pressure generated by operation of the internal combustion engine; and a decrease in a battery storage amount.

Additionally, a vehicle may be equipped with the above-described control device for an internal combustion engine. In such a case, after setting of the automatic stop/start function has been disabled while the hood is open with the vehicle stopped, setting of the automatic stop/start function becomes enabled once the hood is closed and the predetermined vehicle running condition is met. Therefore, when maintenance work on the vehicle is performed with the hood open, automatic stopping and restarting of the operation of the internal combustion engine is reliably prevented. Consequently, maintenance work can be performed efficiently with the hood open, regardless of whether one is aware that the vehicle is equipped with an automatic stop/start function.

In particular, the following embodiment is conceivable as a control method for the internal combustion engine described above.

Namely, a control method for an internal combustion engine controls so as to automatically stop and start the internal combustion engine, based upon a predetermined condition. Setting of an automatic stop/start function that automatically stops and starts operation of the internal combustion engine is disabled when the internal combustion engine is operating while a vehicle is stopped, and the hood is open. Setting of the automatic stop/start function is subsequently enabled when the hood is closed and a predetermined vehicle running condition is met.

According to such an aspect of the invention, a control method for an internal combustion engine can be provided that is capable of reliably preventing automatic stopping and restarting of the operation of the internal combustion engine when maintenance work is performed with the hood open. Consequently, maintenance work can be performed efficiently with the hood open, regardless of whether one is aware that the vehicle is equipped with an automatic stop/ start function.

If the predetermined vehicle running condition is set forth as meeting the relationship, vehicle speed ≥ predetermined vehicle speed, a control method for an internal combustion engine can be provided that makes it possible to clarify determination of the predetermined vehicle running condition, and set a high standard for enabling setting of the automatic stop/start function. This enables maintenance work to be performed more efficiently with the hood open, regardless of whether one is aware that the vehicle is equipped with an automatic stop/start function.

Furthermore, if the transmission is in a non-driving gear at the time when the internal combustion engine is automatically started and operating while the hood is open, setting of the automatic stop/start function is disabled, and operation of the internal combustion engine continues. In such a case, therefore, it is possible to provide a control method for an internal combustion engine that is capable of reliably preventing automatic stopping of the operation of the internal combustion engine, when maintenance work is performed with the hood open. Consequently, maintenance work can be performed efficiently and safely with the hood open, regardless of whether one is aware that the vehicle is equipped with an automatic stop/start function. Moreover, problems caused by stopping the internal combustion engine can also be resolved, such as insufficient braking force due to a decrease in brake boost pressure of a brake servo unit, and a decrease in the battery storage amount.

In contrast to the technical teaching of Patent DE 10211463 B3, the subject-matter of the present invention according to independent claim 1 is directed to a control device for an internal combustion engine wherein control is performed to automatically stop and start the operation of the internal combustion engine based upon a predetermined condition. An automatic stop/start function is set such that an operation of the internal combustion engine is automatically stopped and started while a vehicle is stopped. The control is specifically executed to disable the automatic stop/start function when the hood covering the internal combustion engine is open while the internal combustion engine is running, and to subsequently enable the automatic stop/start function when the hood is closed and a predetermined vehicle running condition is met after setting of the automatic stop/start function is disabled.

Specifically, the predetermined vehicle running condition includes a relationship of the vehicle speed having the same value of a predetermined speed or a greater value.

In summary, after the hood is opened and setting of the automatic stop/start function is disabled, setting of the automatic stop/start function becomes enabled once the hood is closed and the predetermined vehicle running condition is met.

Therefore, when setting of the automatic stop/start function is disabled in order to perform maintenance work with the hood open, setting of the automatic stop/start function is not enabled unless the predetermined vehicle running condition is met. This remains true even if a part of a technician's body or a tool or the like accidentally contacts the switch for detecting whether the hood is open, such that the hood is incorrectly detected as being closed. Thus, when maintenance work is performed with the hood open, automatic stopping and restarting of the internal combustion engine through setting of the automatic stop/start function is reliably prevented. Consequently, maintenance work can be performed efficiently with the hood open, regardless of whether one is aware that the vehicle is equipped with an automatic stop/ start function.

BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

FIG. 1 is a schematic block diagram of an engine equipped with a control device according to an embodiment of the invention;

FIG. 2 is a system block diagram of an ECU; and

FIG. 3 is flowchart showing a procedure by which the ECU executes processing for disabling or enabling the setting of an automatic stop/start function.

DETAILED DESCRIPTION OF THE PREFERRED EMBODIMENTS

Hereinafter, a preferred embodiment for carrying out the invention will be described with reference to the accompanying drawings.

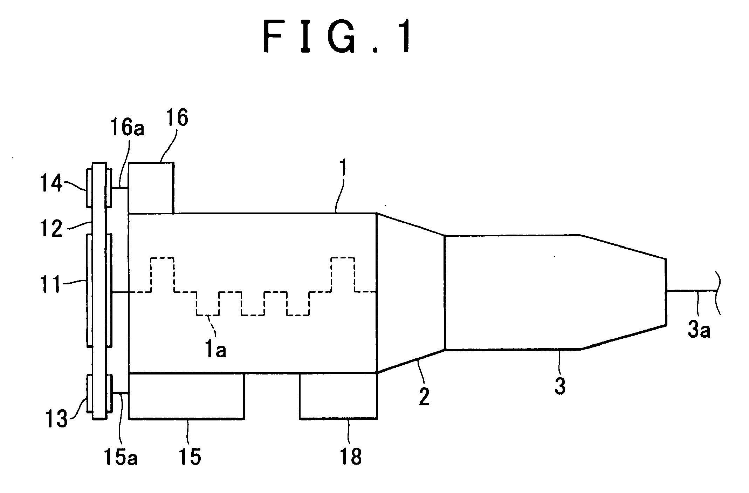

FIG. 1 shows an internal combustion engine equipped with a control device according to an embodiment of the invention. A gasoline engine is utilized as the internal combustion engine (hereinafter referred to as "engine").

In FIG. 1, output of an engine 1 is output from a crankshaft 1a to an output shaft 3a side via a torque converter 2 and an automatic transmission (hereinafter referred to as "A/T") 3 is used as a speed change mechanism. Such output is ultimately transmitted to a wheel (not shown). In addition, output of the engine 1, separate from such output from the engine 1 to the drive train for the wheel, is transmitted to a belt 12 via a first pulley 11 connected to and integrally rotating with the crankshaft 1a. The belt 12 also spans second and third pulleys 13, 14, with the second and third pulleys 13, 14 designed to rotate according to the output transmitted to the belt 12.

A rotation shaft 15a of an auxiliary unit 15 is connected to and integrally rotates with the second pulley 13. The auxiliary unit 15 is designed to drive in accordance with the rotational force transmitted from the belt 12. In this case, the auxiliary unit 15 may be an A/C compressor, a power steering pump, a water pump for engine cooling, or the like. Also note that although FIG. 1 shows only one auxiliary unit 15, in reality one or more auxiliary units among the A/C compressor, the power steering pump, the water pump for engine cooling, or the like are present. Through the use of pulleys, these are all connected to and driven by the belt 12. In the embodiment, the A/C compressor, the power steering pump, and the water pump for engine cooling are provided as auxiliary units 15.

In addition, a rotation shaft 16a of an alternator 16 is connected to and integrally rotates with the third pulley 14. The alternator 16 is designed to drive in accordance with the rotational force transmitted from the belt 12. Rotational force from the engine 1 that is transmitted via the third pulley 14 is converted into electric energy by the alternator 16, and such electric energy is stored in a battery 17.

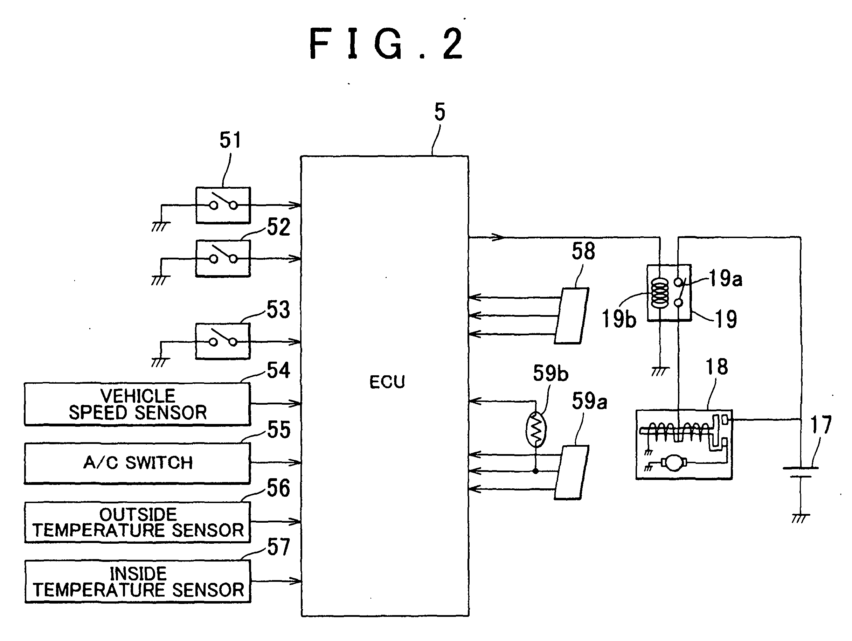

FIG. 2 is a system block diagram of a control device for the engine 1, and will be used to describe an ECU 5 (control device) that executes a storage amount control for the battery 17.

As shown in FIG. 2, the ECU 5 is respectively connected to the following: a parking position switch 51, a neutral position switch 52, an engine hood switch 53, a vehicle speed sensor 54, an A/C switch 55, an outside temperature sensor 56, an inside temperature sensor 57, a brake boost pressure sensor 58, a battery storage sensor 59a, a battery temperature sensor 59b, and a starter relay 19. More specifically, the parking position switch 51 detects that a shift position of the A/T 3 is in park P, which is a non-driving position. The neutral position switch 52 detects that a shift position of the A/T 3 is in neutral N, which is a non-driving position. The engine hood switch 53 detects that an engine hood serving as a hood is open, and the vehicle speed sensor 54 detects the vehicle speed of the vehicle. The outside temperature sensor 56 detects the air temperature outside a vehicle cabin, while the inside temperature sensor 57 detects the temperature inside the vehicle cabin. The brake boost pressure sensor 58 detects a brake boost pressure of a brake servo unit that increases the braking force by utilizing negative pressure generated by operation of the engine 1. The battery storage sensor 59a detects a storage amount of the battery 17, while the battery temperature sensor 59b detects the temperature of the battery 17. The starter relay 19 turns ON and OFF the supply of electric energy from the battery 17 with respect to a starter 18, which starts the engine 1. Furthermore, the brake boost pressure sensor 58 also detects that the brake boost pressure of the brake servo unit has deviated from a predetermined threshold value set in advance. When the detected value (brake boost pressure) is greater than the predetermined threshold value due to pressing of the brake for longer than a predetermined time, the ECU 5 controls the engine 1 so as to stop. On the other hand, when the detected value (brake boost pressure) is less than the predetermined threshold value, the ECU 5 controls the engine 1 so as to restart. Additionally, the starter relay 19 is equipped with a starter relay switch 19a capable of turning ON and OFF, and a solenoid 19b that is excited so to turn ON the starter relay switch 19a.

Included in the ECU 5 structure is a CPU (processor), a ROM, a RAM (which may include a backup RAM for storing data that should be saved when the engine 1 is stopped), an input interface, and an output interface. The CPU is capable of accessing the ROM and the like via an internal bus, and executes various control processing based upon predetermined data, control algorithms, and the like stored in the ROM. Data input from the sensors via the input interface, calculation results, and the like are stored in the RAM and used by the CPU to execute processing.

The ECU 5 receives signals from the parking position switch 51, the neutral position switch 52, the engine hood switch 53, the vehicle speed sensor 54, the A/C switch 55, the outside temperature sensor 56, the inside temperature sensor 57, the brake boost pressure sensor 58, the battery storage sensor 59a, and the battery temperature sensor 59b. Based upon these inputs, the solenoid 19b of the starter relay 19 is excited so as to turn the starter relay switch ON. This in turn automatically starts operation of the engine 1. Alternately, based upon a condition countering the above predetermined conditions, the ECU 5 controls operation of the engine 1 so as to automatically stop in accordance with a command to cut the fuel supply to the engine 1. In other words, the ECU 5 is controlled so as to set an automatic stop/start function that automatically stops or starts operation of the engine 1, based upon a predetermined condition such as the vehicle being stopped. Moreover, the automatic stop/start function is controlled such that it is disabled or enabled based upon the above input.

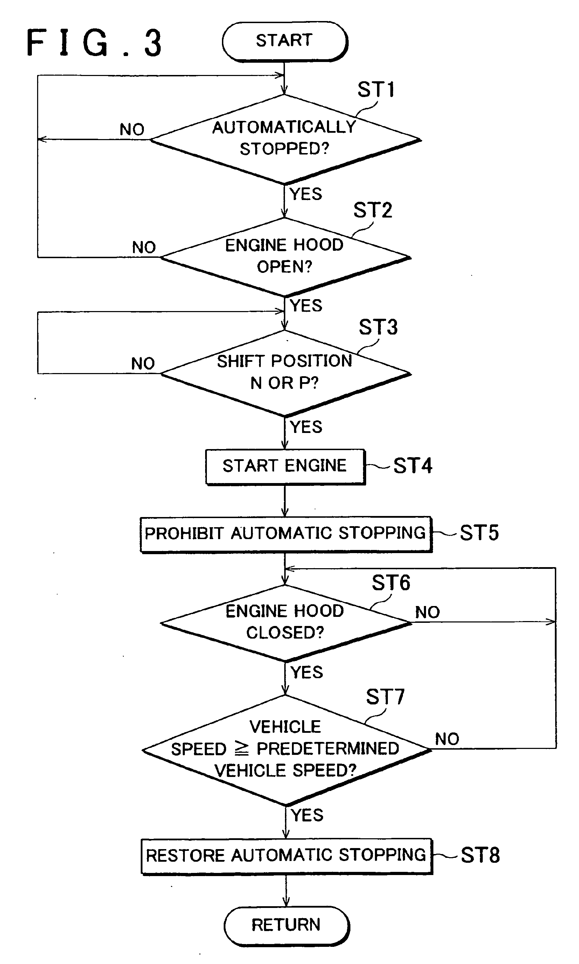

A description based upon a flowchart in FIG. 3 will now be given regarding the procedure for a control method followed when the ECU 5 executes processing that disables or enables the automatic stop/start function. In this case, the vehicle is temporarily stopped in preparation for maintenance work to be performed in the engine room, and the engine 1 is not in operation. Also note that two types of automatic stop/start functions are commonly known: D economy running that performs a control using the engine automatic stop/start function when the shift position of the A/T 3 is positioned in neutral N, park P, or drive D; and N economy running that only performs a control using the engine automatic stop/start function when the shift position of the A/T 3 is positioned in neutral N or park P, and does not perform a control using the engine automatic stop/start function in other positions. In this embodiment, the description applies to the N economy running type.

First in step ST1 of the flowchart in FIG. 3, it is determined whether the automatic stop/start function is enabled with the engine 1 automatically stopped. If YES, that is, if the engine 1 is automatically stopped, it is determined whether opening of the hood has been detected by the engine hood switch 53 in step ST2; in other words, it is determined whether the engine hood is open.

If the determination made in step ST2 is NO, that is, if the engine hood is closed, the processing waits until a determination is made in step ST1 that the engine 1 is automatically stopped. However, if the determination made in step ST2 is YES, that is, if the engine hood is open, it is determined in step ST3 by the parking position switch 51 or the neutral position switch 52 whether the shift position of the A/T 3 is positioned in neutral N or park P (non-driving position).

If the determination made in step ST3 is NO, that is, if the shift position is at a position other than neutral N or park P (for example, drive D), the processing waits until a determination is made in step ST3 that the shift position is in neutral N or park P. However, if the determination made in step ST3 is YES, that is, if the shift position is in neutral N or park P, operation of the engine 1 is automatically started in step ST4, by exciting the solenoid 19b of the starter relay 19 to turn ON the starter relay switch 19a.

Thereafter in step ST5, the automatic stop/start function is disabled (cancelled) so that if the engine is running, the engine 1 does not automatically stop; in other words, automatic stopping is disabled.

In step ST6, it is subsequently determined by the engine hood switch 53 whether opening of the engine hood is not detected, that is, it is determined whether the engine hood is closed. If the determination made in step ST6 is NO, that is, if the engine hood is open, the processing waits until the engine hood is closed. However, if the determination made in step ST6 is YES, that is, if the engine hood is closed, it is determined whether a predetermined vehicle running condition is met in step ST7. More specifically, it is determined whether a vehicle speed detected by the vehicle sensor 54 is equal to or greater than a predetermined vehicle speed V (for example, 3 to 5 km/h). If the determination made is NO, that is, if the vehicle speed is less than the predetermined vehicle speed V (3 to 5 km/h), the automatic stop/start function remains disabled (automatic stopping remains disabled), and the process returns to step ST6.

However, if the determination made in step ST7 is YES, that is, if the vehicle speed is equal to or greater than the predetermined vehicle speed (3 to 5 km/h), the automatic stop/start function is enabled; in other words, automatic stopping is restored. Accordingly, a control can be performed for automatically stopping or starting the engine 1 using the automatic stop/start function, based upon a predetermined condition.

In this manner, after the vehicle is stopped and the engine hood opened and the automatic stop/start function disabled, the automatic stop/start function is again enabled when the engine hood is closed and the predetermined vehicle running condition is (vehicle speed ≥ predetermined vehicle speed V) is met. Therefore, when the automatic stop/start function is disabled so that maintenance work can be performed with the engine hood open, the automatic stop/start function is disabled unless the predetermined vehicle running condition is met. This remains true even if the technician or a tool or the like accidentally contacts the release switch for the engine hood such that the engine hood is incorrectly detected as being closed. Thus, when maintenance work is performed with the engine hood open, automatic stopping and restarting of the operation of the engine 1 is reliably prevented. Consequently, maintenance work can be performed efficiently with the engine hood open, regardless of whether one is aware that the vehicle is equipped with an automatic stop/start function.

In addition, when the vehicle speed detected by the vehicle speed sensor 54 is equal to or greater than the predetermined vehicle speed V (3 to 5 km/h), the predetermined vehicle running condition (vehicle speed ≥ predetermined vehicle speed V) is met and the automatic stop/start function is enabled. Consequently, a control can be performed to automatically stop or start operation of the engine 1 using the automatic stop/start function, based upon a predetermined condition. Therefore, determination of a predetermined vehicle running condition is made clear, and a standard for enabling the automatic stop/start function is set high. This is extremely advantageous for enabling maintenance work to be performed efficiently with the engine hood open, regardless of whether one is aware that the vehicle is equipped with an automatic stop/start function.

Furthermore, when the A/T 3 is in the neutral position N or the parking position P (non-driving position) and the engine hood is open, the engine 1 automatically starts and operates. Also, the automatic stop/start function is subsequently disabled and the engine is continues to operate. Therefore, problems caused by stopping operation of the engine 1 can be smoothly resolved. For example, such problems include: a problem that occurs when the A/C is turned ON by the A/C switch 55 and the outside temperature detected by the outside temperature sensor 56 or the inside temperature detected by the inside temperature sensor 57 exceeds a tolerance value, making air conditioning using the A/C necessary; a problem where the brake boost pressure of the brake servo unit detected by the brake boost pressure sensor 58 falls below a predetermined threshold value (e.g. 0.4 MPa) or a reduction variation width of the brake boost pressure of the brake servo unit exceeds a predetermined threshold value (e.g. 0.06 MPa); and a problem where the storage amount of the battery 17 detected by the battery storage sensor 59a falls below a predetermined threshold value (a storage amount required for restarting the engine 1) or the temperature of the battery 17 detected by the battery temperature sensor 59b falls below a predetermined temperature.

It should be noted that the invention is not particularly limited to the above embodiment, and may also include other various modifications. For example, in the above embodiment, the engine 1 automatically starts and operates when the A/T 3 is in the neutral position N or the parking position P (non-driving position) with the engine hood open, after which the automatic stop/start function is disabled. However, the automatic stop/start function may be disabled after the engine is stopped, provided that the shift position of the A/T is in the neutral position N or the parking position P with the engine hood open. In such a case, when maintenance work is performed with the engine hood open, automatic restarting of the engine is reliably prevented. Consequently, maintenance work can be performed efficiently with the engine hood open, regardless of whether one is aware that the vehicle is equipped with an automatic stop/start function.

Moreover, the above embodiment describes a case where the invention is applied to the A/T (automatic transmission) 3 used as a speed change mechanism; however, the invention may naturally also be used when the speed change mechanism is a manual transmission.

Furthermore, the above embodiment also describes the case where the control device of the internal combustion engine of the invention is applied to a vehicle whose wheels are driven by the gasoline engine 1. However, the engine control device may also be applied to a so-called hybrid vehicle, in which a motor/generator that functions as a generator or a motor as necessary is connected to and integrally rotates with a pulley that is connected to and rotates with a belt spanning the first pulley of the crankshaft. Either or both the motor/generator and the engine may be designed to drive a wheel and various auxiliary units. Also note that the engine is not limited to a gasoline engine, and that the invention may be widely applied as a control device for any internal combustion engine such as a diesel engine or gas engine.

A control device for an engine that controls the engine so that the engine automatically stops or starts when a predetermined condition is met. The automatic stop/start function is set so that the engine automatically stops or starts when the vehicle is stopped. The control device performs a control to disable the automatic stop/start function during operation of the engine when an engine hood switch (53) indicates that the engine hood is open. Thereafter, a control is performed so as to enable the automatic stop/start function, provided that the engine hood is detected as closed by the engine hood switch and a predetermined vehicle running condition (vehicle speed $\geq$ predetermined vehicle speed V) is met.

**Claims**

1. A control device for an internal combustion engine that executes controls to automatically stop and start operation of the internal combustion engine, based upon a predetermined condition, **characterized in that**:

   an automatic stop/start function is set such that operation of the internal combustion engine is automatically stopped and started while a vehicle is stopped; and
   a control is executed to disable the automatic stop/start function when a hood covering the internal combustion engine is open while the internal combustion engine is running, and to subsequently enable the automatic stop/start function when the hood is closed and a predetermined vehicle running condition is met after setting of the automatic stop/start function is disabled,

   wherein the predetermined vehicle running condition is a case where the relationship:

$$\text{vehicle speed} \geq \text{predetermined vehicle speed}$$

   is met.

2. The control device according to claim 1, wherein the internal combustion engine is controlled so as to automatically start and operate while the hood is open, whereas the automatic stop/start function is disabled and operation of the internal combustion engine continues when a shift position of a transmission is in a non-driving position.

3. A vehicle **characterized by** comprising the control device for an internal combustion engine according to any one of claims 1 and 2.

4. A control method for an internal combustion engine that controls so as to automatically stop and start operation of the internal combustion engine, based upon a predetermined condition, **characterized by** comprising:

   disabling an automatic stop/start function that automatically stops and starts operation of the internal combustion engine when the internal combustion engine is operating while a vehicle is stopped, and a hood covering the internal combustion engine is open; and
   subsequently enabling the automatic stop/start function if the hood is closed and a predetermined vehicle running condition is met,

   wherein the predetermined vehicle running condition is a case where the relationship:

$$\texttt{vehicle speed} \geq \texttt{predetermined vehicle speed}$$

is met.

**5.** The control method according to claim 4, wherein
the internal combustion engine automatically starts and operates; and wherein
the automatic stop/start function at this time is disabled and operation of the internal combustion engine is continued
if a shift position of a transmission is in a non-driving position.

**Patentansprüche**

**1.** Steuervorrichtung für eine Verbrennungskraftmaschine, die Steuerungen ausführt, um einen Betrieb der Verbrennungskraftmaschine automatisch abzustellen und zu starten, basierend auf einer vorbestimmten Bedingung, **dadurch gekennzeichnet, dass**:

eine automatische Abstell-/Startfunktion so eingestellt ist, dass ein Betrieb der Verbrennungskraftmaschine automatisch abgestellt und gestartet wird, während ein Fahrzeug anhält; und
eine Steuerung ausgeführt wird, um die automatische Abstell-/Startfunktion zu deaktivieren, wenn eine Motorhaube, die die Verbrennungskraftmaschine bedeckt, geöffnet ist, während die Verbrennungskraftmaschine in Betrieb ist, und anschließend die automatische Abstell-/Startfunktion aktiviert, wenn die Motorhaube geschlossen ist, und eine vorbestimmte Fahrzeugbetriebsbedingung erfüllt ist, nachdem die automatische Abstell-/Startfunktion deaktiviert worden ist,

wobei die vorbestimmte Fahrzeugbetriebsbedingung ein Fall ist, in dem die Beziehung:

$$\texttt{Fahrzeuggeschwindigkeit} \geq \texttt{vorbestimmte}$$
$$\texttt{Fahrzeuggeschwindigkeit}$$

erfüllt ist.

**2.** Steuervorrichtung gemäß Anspruch 1, wobei die Verbrennungskraftmaschine so gesteuert wird, automatisch zu starten und in Betrieb zu sein, während die Motorhaube offen ist, wohingegen die automatische Abstell-/Startfunktion deaktiviert ist, und ein Betrieb der Verbrennungskraftmaschine andauert, wenn eine Schaltposition eines Getriebes sich auf einer Leerlaufposition befindet.

**3.** Fahrzeug, **dadurch gekennzeichnet, dass** es die Steuervorrichtung für eine Verbrennungskraftmaschine gemäß einem der Ansprüche 1 oder 2 aufweist.

**4.** Steuerverfahren für eine Verbrennungskraftmaschine, das eine Verbrennungskraftmaschine so steuert, automatisch einen Betrieb abzustellen und zu starten, basierend auf einer vorbestimmten Bedingung, **dadurch gekennzeichnet, dass** das Steuerverfahren aufweist:

deaktivieren einer automatischen Abstell-/Startfunktion, die einen Betrieb der Verbrennungskraftmaschine automatisch abstellt und startet, wenn die Verbrennungskraftmaschine in Betrieb ist, während ein Fahrzeug angehalten ist, und eine Motorhaube, die die Verbrennungskraftmaschine bedeckt, offen ist; und
anschließendes Aktivieren der automatischen Abstell-/Startfunktion, wenn die Motorhaube geschlossen ist, und eine vorbestimmte Fahrzeugbetriebsbedingung erfüllt ist,

wobei die vorbestimmte Fahrzeugbetriebsbedingung ein Fall ist, in dem die Beziehung:

$$\text{Fahrzeuggeschwindigkeit} \geq \text{vorbestimmte}$$
$$\text{Fahrzeuggeschwindigkeit}$$

erfüllt ist.

**5.** Steuerverfahren gemäß Anspruch 4, wobei
die Verbrennungskraftmaschine automatisch startet und in Betrieb ist; und wobei
die automatische Abstell-/Startfunktion zu diesem Zeitpunkt deaktiviert ist, und ein Betrieb der Verbrennungskraftmaschine andauert, wenn eine Schaltposition eines Getriebes sich in einer Leerlaufposition befindet.

**Revendications**

**1.** Dispositif de commande pour un moteur à combustion interne qui exécute une commande pour arrêter et démarrer automatiquement le fonctionnement du moteur à combustion interne, sur la base d'une condition prédéterminée, **caractérisé en ce que** :

une fonction d'arrêt/démarrage automatique est établie d'une manière telle que le fonctionnement du moteur à combustion interne est arrêté et démarré automatiquement alors que le véhicule est arrêté ; et
une commande est exécutée pour désactiver la fonction d'arrêt/démarrage automatique lorsqu'un capot recouvrant le moteur à combustion interne est ouvert alors que le moteur à combustion interne est en cours de fonctionnement, et pour activer par la suite de la fonction d'arrêt/démarrage automatique lorsque le capot est fermé et une condition de déplacement prédéterminée du véhicule est satisfaite après que le réglage de la fonction d'arrêt/démarrage automatique ait été désactivé,

dans lequel la condition de déplacement prédéterminée du véhicule est un cas dans lequel la relation:

$$\text{vitesse du véhicule} \geq \text{vitesse du véhicule}$$
$$\text{prédéterminée}$$

est satisfaite.

**2.** Dispositif de commande selon la revendication 1, dans lequel le moteur à combustion interne est commandé de façon à démarrer automatiquement et fonctionne alors que le capot est ouvert, alors que la fonction d'arrêt/démarrage automatique est désactivée et que le fonctionnement du moteur à combustion interne continue lorsqu'une position du levier de vitesse d'une transmission se trouve dans une position de non entraînement.

**3.** Véhicule **caractérisé en ce qu'**il comprend le dispositif de commande pour un moteur à combustion interne selon l'une quelconque des revendications 1 et 2.

**4.** Procédé de commande pour un moteur à combustion interne qui fonctionne de façon à arrêter et démarrer automatiquement le fonctionnement du moteur à combustion interne, sur la base d'une condition prédéterminée, **caractérisé en ce qu'**il comprend les étapes consistant à :

désactiver une fonction d'arrêt/démarrage automatique qui arrête et démarre automatiquement le fonctionnement du moteur à combustion interne lorsque le moteur à combustion interne est en fonctionnement alors que le véhicule est arrêté, et lorsqu'un capot recouvrant le moteur à combustion interne est ouvert ; et
activer par la suite de la fonction d'arrêt/démarrage automatique si le capot est fermé et qu'une condition de déplacement prédéterminée du véhicule est satisfaite,

dans lequel la condition de déplacement prédéterminée du véhicule est un cas dans lequel la relation :

vitesse du véhicule $\geq$ vitesse du véhicule prédéterminée

est satisfaite.

5. Procédé de commande selon la revendication 4, dans lequel
le moteur à combustion interne démarre automatiquement et fonctionne ; et dans lequel
la fonction d'arrêt/démarrage automatique à ce moment est désactivée et le fonctionnement du moteur à combustion interne continue si une position du levier de vitesse d'une transmission se trouve dans une position de non entraînement.

# F I G . 1

# FIG.2

EP 1 647 707 B1

# FIG.3

START

ST1

AUTOMATICALLY STOPPED?

NO ←

YES

ST2

ENGINE HOOD OPEN?

NO ←

YES

ST3

SHIFT POSITION N OR P?

NO ←

YES

START ENGINE — ST4

PROHIBIT AUTOMATIC STOPPING — ST5

ST6

ENGINE HOOD CLOSED?

NO →

YES

ST7

VEHICLE SPEED ≧ PREDETERMINED VEHICLE SPEED?

NO →

YES

RESTORE AUTOMATIC STOPPING — ST8

RETURN